# EUROPÄISCHE PATENTANMELDUNG

(11) **EP 3 282 205 A2**
(43) Veröffentlichungstag der Anmeldung: **14.02.2018**
(21) Anmeldenummer: 17184315.4
(22) Anmeldetag: 01.08.2017
(51) Int. Cl.: F24F 13/02

(54) **ZULUFTVORRICHTUNG**

(30) Priorität: 10.08.2016 DE 102016114864
(71) Anmelder: deconta GmbH, 46419 Isselburg (DE)
(72) Erfinder: Weßling, Wilhelm, 46397 Bocholt (DE)
(74) Vertreter: Rätsch, Caroline

(57) **Zusammenfassung**

Die Erfindung betrifft eine Zuluftvorrichtung für einen Arbeitsraum, mit einem Zuluftkanal (5), der eine Außenwandung (9) aufweist und eine Einlassöffnung (7) und eine Auslassöffnung (6) bildet, wobei der Zuluftkanal (5) derart abgewinkelt ausgebildet ist, dass sich die Außenwandung (9) mit Abstand (A) zumindest teilweise über die Auslassöffnung (6) erstreckt.

## Beschreibung

Die Erfindung betrifft eine Zuluftvorrichtung für einen Arbeitsraum.

Unter Arbeitsraum wird im Sinne der Erfindung insbesondere ein kontaminierter Bereich verstanden. Beispielsweise mit Asbest kontaminierte Bereiche müssen bei Sanierungsarbeiten ständig unter Unterdruck gehalten werden, um zu vermeiden, dass das kontaminierte Material wie zum Beispiel das Asbest beim Abbau aus dem kontaminierten Bereich austritt. Hierzu ist an den Arbeitsraum eine Saugvorrichtung angeschlossen, die auch als Unterdruckhaltegerät bezeichnet wird und kontrolliert Luft aus dem Arbeitsraum absaugt und filtert. Durch eine Ansaugöffnung wird frische Luft in den Arbeitsraum eingelassen. Es ergibt sich ein Luftstrom zwischen der Ansaugöffnung und der Saugvorrichtung, wobei der Arbeitsraum unter einem leichten Unterdruck gehalten wird.

Die Zuluftvorrichtung kann als Fenster ausgebildet sein, das in eine den Arbeitsraum begrenzende Öffnung eingesetzt oder darauf aufgesetzt wird. Das Fenster weist Lamellen auf, die bei einem Ansaugen die Zuluftvorrichtung öffnen und bei einem im Arbeitsraum entstehenden Überdruck schließen, um zu vermeiden, dass kontaminiertes Material durch die Zuluftvorrichtung aus dem Arbeitsraum austritt.

Das vorbeschriebenen System hat sich grundsätzlich bewährt. In der Praxis allerdings wurde gefunden, dass es zu Situationen kommen kann, in denen trotz einer laufenden Saugvorrichtung Überdrücke in dem Arbeitsraum entstehen. Derartige Überdrücke können bewirken, dass kontaminiertes Material unkontrolliert aus dem Arbeitsraum austritt.

Ausgehend von dem bekannten Stand der Technik liegt der Erfindung die **Aufgabe** zugrunde, das bekannte System dahingehend zu verbessern, dass ungewollte Überdrücke im Arbeitsraum unterbunden werden.

Zur **Lösung** dieser Aufgabe ist die eingangs genannte Zuluftvorrichtung gekennzeichnet durch einen Zuluftkanal, der eine Außenwandung aufweist und eine Einlassöffnung und eine Auslassöffnung bildet, wobei der Zuluftkanal derart abgewinkelt ausgebildet ist, dass sich die Außenwandung mit Abstand zumindest teilweise über die Auslassöffnung erstreckt.

Der Erfindung liegt die Erkenntnis zugrunde, dass die in dem Arbeitsraum gelegentlich entstehenden Überdrücke auf Windeinflüsse von außen zurückgehen. Sofern nämlich der Wind in einer bestimmten Stärke auf die Einlassöffnung der Zuluftvorrichtung drückt, kann der Fall auftreten, dass der Wind stärker ist als die Saugleistung der Saugvorrichtung. Die Folge ist ein Ansteigen des Druckes innerhalb des Arbeitsraumes mit der Gefahr, dass durch die Zuluftvorrichtung, die eigentlich zum Zuführen von Frischluft vorgesehen ist, kontaminiertes Material austritt. Dies ist insbesondere bei gesundheitsschädlichen Substanzen wie zum Beispiel Asbest gefährlich.

Hier schafft die Erfindung Abhilfe. Erfindungsgemäß weist die Zuluftvorrichtung einen Zuluftkanal mit einer Außenwandung auf. Der Zuluftkanal ist derart abgewinkelt, dass sich die Außenwandung mit Abstand zumindest teilweise über die Auslassöffnung erstreckt. Die erfindungsgemäße Konstruktion hat zur Folge, dass Wind, der auf eine Hauswand steht, in der die Zuluftvorrichtung eingelassen ist, nicht unmittelbar über die Einlassöffnung und die Auslassöffnung durch die Zuluftvorrichtung hindurchtreten kann. Vielmehr wird die Auslassöffnung vorteilhaft von der Außenwandung abgeschirmt. Einlassöffnung und Auslassöffnung fluchten also nicht, sondern sind vorteilhaft versetzt zueinander angeordnet.

In aller Regel wird man die erfindungsgemäße Zuluftvorrichtung an Hauswänden befestigen, die vertikal oder im Wesentlichen vertikal verlaufen. Vorzugsweise geht die Einlassöffnung in einer derartigen Einbaulage zur Seite hin und/oder insbesondere nach unten ab. Eine derartige Anordnung hat den Vorteil, dass einerseits auf die Hauswand auftreffender Wind nicht unmittelbar durch die Zuluftvorrichtung hindurchtreten kann, sondern zunächst umgelenkt wird. Hierdurch verliert der Wind seine Windkraft. Andererseits ist bei einer seitlichen und/oder nach unten abgehenden Anordnung die Einlassöffnung vor eventuellem Regenwasser und Verunreinigungen geschützt, die die Einlassöffnung und/oder die Auslassöffnung zusetzen können.

Sofern die Einlassöffnung im eingebauten Zustand zur Seite hin abgeht, wird man die Einlassöffnung gegebenenfalls noch mit einem zusätzlichen Schirm schützen. Dieser kann entfallen, wenn die Einlassöffnung nach unten abgeht. Der guten Ordnung halber sei darauf hingewiesen, dass es auch Einbaulagen gibt, bei denen die Einlassöffnung teilweise seitlich und teilweise auch nach unten abgeht. Eine derartige schräge Orientierung der Einlassöffnung kann man insbesondere bei runden Querschnitten des Zuluftkanals vorsehen. Wenngleich derartige Einbaulagen grundsätzlich möglich sind, wird im Rahmen der Erfindung konstruktionsbedingt ein eckiger Querschnitt des Zuluftkanals als vorteilhaft angesehen. Vorzugsweise geht dabei aus den besagten Gründen die Einlassöffnung im eingebauten Zustand nach unten ab. Vorteilhafterweise sind die Einlassöffnung und die Auslassöffnung senkrecht zueinander angeordnet.

Um ein Rückströmen von Luft aus dem Arbeitsraum nach außen zu verhindern, weist die erfindungsgemäße Zuluftvorrichtung vorzugsweise mindestens eine Klappe auf, die den Zuluftkanal verschließen kann. Die Klappe ist zweckmäßig in Richtung der Auslassöffnung schwenkbar. Bei einem Unterdruck im Arbeitsraum öffnet sie sich in Richtung der Auslassöffnung. Bei einem eventuellen Überdruck im Arbeitsraum verriegelt die Klappe den Zuluftkanal, so dass keine Luft mehr durch die Einlassöffnung nach außen treten kann.

Die Klappe ist schwenkbar in dem Zuluftkanal angeordnet. Als vorteilhaft wird es angesehen, wenn die Klappe an der Innenseite der Außenwandung mittels eines Gelenks befestigt ist. Es können auch mehrere Klappen schwenkbar in dem Zuluftkanal angeordnet sein. Sie liegen dann vorzugsweise in einer Ebene. Vorteilhafterweise weisen sie dieselbe Schwenkachse auf.

In Weiterbildung der Erfindung wird vorgeschlagen, dass die mindestens eine Klappe starr mit dem Zuluftkanal verbunden ist. Dies bedeutet, dass die Klappe am Ort ihrer Befestigung nicht schwenkbar ist, was durch die Einsparung eines Gelenks eine zuverlässige und kostengünstige Konstruktion zur Folge hat. Die Schwenkbarkeit wird vorteilhaft durch die Flexibilität der Klappe zur Verfügung gestellt. Den Grad der Flexibilität wird man auf die Saugvorrichtung abstimmen und so wählen, dass bei laufender Saugvorrichtung die Klappen weit genug öffnen, um Frischluft durch die Einlassöffnung eintreten zu lassen.

Sobald im Arbeitsraum jedoch ein Überdruck auftritt, müssen die flexiblen Klappen den Strömungsquerschnitt des Zuluftkanals zuverlässig schließen. Hierzu ist in dem Zuluftkanal vorzugsweise mindestens ein Anschlag angeordnet. Die jeweilige Klappen wirken derart mit dem zugehörigen Anschlag zusammen, dass bei einem Anliegen der Klappe(n) an dem Anschlag der Zuluftkanal verschlossen ist.

Die Klappe kann jeweils mit einer Feder vorgespannt sein. Alternativ wird die Schwerkraft der jeweiligen Klappe genutzt, um den Zuluftkanal zu schließen. In wesentlicher Weiterbildung der Erfindung wird vorgeschlagen, dass der Anschlag eine Anschlagebene bildet, in der die Klappe in ihrer Schließstellung an dem Anschlag anliegt, und dass die Anschlagebene im eingebauten Zustand der Zuluftvorrichtung geneigt zur Vertikalen angeordnet ist. Unter der Vertikalen in diesem Zusammenhang wird, wie technisch bekannt, die Lotrichtung verstanden. Versuche haben ergeben, dass die Klappen besonders gut schließen, wenn der Anschlag bzw. die Anschlagebene gegenüber der Vertikalen geneigt ist. Dann liegt die Klappe aufgrund ihres Eigengewichts zuverlässig an dem Anschlag an.

Als besonders vorteilhaft hat sich eine Anschlagebene im eingebauten Zustand der Zuluftvorrichtung ergeben, die mit der Vertikalen einen Winkel zwischen 5° und 45° einschließt. In diesem Bereich schließt die Klappe einerseits gut, andererseits ist der Strömungsquerschnitt groß genug, um Frischluft in einem ausreichenden Maße hindurchzulassen.

Wie vorstehend ausgeführt, kann lediglich eine Klappe vorgesehen sein. Diese wirkt dann mit einem Anschlag zusammen. Bei zwei (und mehr) Klappen ist jeder Klappe vorzugsweise ein Anschlag zugeordnet. Eine vorteilhafte Ausführungsform der Erfindung ist dadurch gekennzeichnet, dass in dem Zuluftkanal mindestens zwei Anschläge angeordnet sind, wobei jeder Anschlag einen umlaufenden Rahmen bildet. Dieser Konstruktion liegt die Erkenntnis zugrunde, dass bei Einsatz von flexiblen Klappen, bei denen die Schwenkbarkeit durch die Flexibilität zur Verfügung gestellt wird, mehrere kleine Klappen besser an dem Rahmen anliegen als lediglich eine große Klappe. Bei letzterer könnte die Gefahr bestehen, dass aufgrund ihrer Flexibilität und damit eventuellen Durchbiegung es nicht zu einer planen Anlage an dem Anschlag kommt. Dadurch könnte die Schließwirkung beeinträchtigt sein. Im schlimmsten Fall droht ein Verkanten.

Eingangs wurde bereits die Wirkung von Wind angesprochen, der in den Arbeitsraum hineindrücken kann. Zur Vermeidung dieses Problems ist erfindungsgemäß vorgesehen, dass der Zuluftkanal derart abgewinkelt ausgebildet ist, dass sich die Außenwandung mit Abstand zumindest teilweise über die Auslassöffnung erstreckt. Dabei kann die Einlassöffnung nach unten abgehen. Versuche haben ergeben, dass insbesondere bei nach unten gerichteten Einlassöffnungen bei bestimmten bauwerkseitigen Konstellationen wie zum Beispiel einem Hochhaus Aufwinde entstehen können, die in die zum Beispiel nach unten abgehende Einlassöffnung drücken. In wesentlicher Weiterbildung der Erfindung wird daher vorgeschlagen, dass die Zuluftvorrichtung eine Abdeckung aufweist, die sich vorzugsweise vollständig mit Abstand über die Einlassöffnung erstreckt. Die Abdeckung kann als Platte ausgebildet sein, die mit Abstand zu der Einlassöffnung angeordnet ist. Die Abdeckplatte begrenzt mit dem Zuluftkanal mindestens eine Seitenöffnung, durch die Frischluft in die Einlassöffnung eintreten kann. Durch die Abdeckung ist ein direkter Eintritt in die Einlassöffnung nicht mehr möglich, so dass ungewollte Überdrücke im Arbeitsraum noch einmal besser verhindert werden.

Damit die Zuluftvorrichtung an unterschiedliche bauwerkseitige Konstellationen angepasst werden kann, wird vorgeschlagen, dass der Abstand zwischen der Einlassöffnung und der Abdeckung veränderbar ist.

Eine besonders vorteilhafte Ausführungsform der Erfindung ist dadurch gekennzeichnet, dass die Abdeckung mindestens zwei Seitenwände aufweist, die mit der Außenwandung des Zuluftkanals zusammenwirken. Die Abdeckung stützt sich vorteilhaft über die Seitenwände an der Außenwandung ab. Hierbei verbleiben Seitenöffnungen, durch die hindurch Frischluft in die Einlassöffnung eintreten kann. Vorzugsweise ist an mindestens zwei sich gegenüberliegenden Seiten der Abdeckung jeweils mindestens eine Seitenwand angeordnet. Die sich gegenüberliegenden Seitenwände gewährleisten eine optimale Abstützung der Abdeckung an der Außenwandung. Die Lage der Abdeckung in Bezug auf den Zuluftkanal ist somit selbst bei starkem Wind gesichert. Weiterhin vorzugsweise sind die Seitenwände parallel zueinander und/oder jeweils senkrecht in Bezug auf die Abdeckung ausgerichtet. Dies gilt insbesondere, wenn der Zuluftkanal einen gleichbleibenden rechteckigen Querschnitt aufweist. Denn in diesem Fall bleibt auch der Abstand der Seitenwände zur Außenwandung immer gleich, und zwar unabhängig von der Höhenlage der Abdeckung in Bezug auf den Zuluftkanal. Auf diese Weise ist die gewünschte Abstützung der Abdeckung an der Außenwandung auch dann sichergestellt, wenn die Höhenlage der Abdeckung verändert wird.

Zur Abstützung der Abdeckung an der Außenwandung können die Seitenwände wahlweise außenliegend oder - zumindest abschnittsweise - innenliegend in Bezug auf den Zuluftkanal angeordnet sein. Ob außenliegend oder innenliegend kann entscheidend für die Höhenverstellbarkeit der Abdeckung sein.

Bei außenliegenden Seitenwände kann eine Höhenverstellung der Abdeckung nur von außen vorgenommen werden. Das heißt, dass zur Höhenverstellung die Zugänglichkeit der Zuluftvorrichtung von außen gegeben sein muss. Ist dies nicht der Fall, da beispielsweise die Zuluftvorrichtung in einer gewissen Höhe außen an der Fassade eines Hochhauses angebracht ist, kann die Abdeckung nur noch mit Hilfe eines Gerüsts oder dergleichen höhenverstellt werden. Anders verhält es sich, wenn die Seitenwände zumindest abschnittsweise in den Zuluftkanal eingreifen, das heißt innenliegend angeordnet sind. Denn dann kann von der Raumseite aus über die Auslassöffnung in den Zuluftkanal hineingegriffen werden, um die Höhenlage der Abdeckung zu verstellen.

Um das Einführen der Seitenwände in den Zuluftkanal zu ermöglichen, wird vorgeschlagen, dass die Seitenwände eine geringere Breite als die Einlassöffnung aufweisen und/oder sich zum Ende hin verjüngend ausgeführt sind. Hierbei handelt es sich um dasjenige Ende, das der Abdeckung entfernt liegt. Diese Maßnahmen - jeweils allein oder in Kombination - schaffen zudem einen gewissen Bewegungsraum innerhalb des Zuluftkanals, der eine nachträgliche Höhenverstellung der Abdeckung in Bezug auf den Zuluftkanal erleichtert.

Vorzugsweise ist in den Seitenwänden mindestens ein Schlitz ausgebildet, in den jeweils ein von der Außenwandung abgehender Vorsprung eingreift. Bei dem Vorsprung kann es sich zum Beispiel um einen Zapfen, einen Haken oder eine Schraube handeln. Vorzugsweise weist der Vorsprung an seinem freien Ende eine Verdickung, beispielsweise in Form eines Kopfes oder einer Kopfplatte, auf, so dass er den Schlitz in zumindest einem Abschnitt hintergreift. Auf diese Weise wird erreicht, dass die Abdeckung bei einer Höhenverstellung einerseits sich geführt und andererseits auch sicher gehalten wird, ohne das die Gefahr eines Abfallens der Abdeckung besteht.

Der von der Außenwandung abgehende Vorsprung kann sowohl außenseitig, als auch innenseitig, das heißt im Zuluftkanal, angeordnet sein. Die Anordnung hängt von der konkreten Ausgestaltung der Abdeckung ab. Denn weist diese außenliegende Seitenwände auf, ist auch der Vorsprung außenliegend angeordnet, da er andernfalls nicht in Eingriff mit dem Schlitz bringbar ist. Bei innenliegenden Seitenwänden verhält es sich umgekehrt. Darüber hinaus können außen- und innenliegende Vorsprünge an der Außenwandung vorgesehen sein, die wahlweise - in Abhängigkeit von den jeweiligen örtlichen Gegebenheiten - die Verwendung einer Abdeckung mit außenliegenden oder innenliegenden Seitenwänden ermöglichen. Der Zuluftkanal kann dann bei Bedarf mit unterschiedlichen Abdeckungen kombiniert werden. Vorteilhafterweise ist der mindestens eine Schlitz der Seitenwände der Abdeckung als Kulisse ausgeführt. Die Höhenverstellung der Abdeckung kann dann während des Eingriffs des Vorsprungs in den Schlitz vorgenommen werden. Das heißt, dass die Abdeckung während der Höhenverstellung verliersicher gehalten ist. Dies ist insbesondere von Vorteil, wenn die Zuluftvorrichtung in großer Höhe und/oder im öffentlichen Raum angebracht ist, wo Personen durch eine herabfallende Abdeckung gefährdet werden könnten.

Ferner bevorzugt bildet die Kulisse in regelmäßigen Abständen Sitze für den Vorsprung aus. Der Abstand der Abdeckung in Bezug auf die Einlassöffnung ist dann stufenweise verstellbar. Zudem gewährleisten die Sitze eine Lagesicherung der Abdeckung, so dass sich der eingestellte Abstand nicht ohne Weiteres von alleine wieder verstellt.

Als besonders vorteilhaft wird es angesehen, wenn die Seitenwände der Abdeckung über mindestens einen Steg verbunden sind. Über den Steg wird eine Aussteifung der Seitenwände bewirkt, so dass sich die Stabilität der Abdeckung erhöht. Bei zumindest abschnittsweise innenliegenden Seitenwänden kann der Steg zudem vorteilhaft als Griff genutzt werden. Der Steg verbessert auf diese Weise die Handhabbarkeit der Abdeckung bei einer Höhenverstellung. Bevorzugt ist der Steg im Bereich der Enden der Seitenwände angeordnet, so dass er sich so nah wie möglich an der Auslassöffnung des Zuluftkanals befindet, was die Handhabbarkeit verbessert. Zudem wird auf diese Weise eine optimale Aussteifung der Seitenwände erreicht.

Bei der erfindungsgemäßen Zuluftvorrichtung hat es sich als vorteilhaft erwiesen, wenn die Zuluftvorrichtung einen vorzugsweise umlaufenden Rand aufweist, der von der Außenwandung absteht. Zur Befestigung der Zuluftvorrichtung kann in der Praxis beispielsweise die Öffnung eines Fensters verwendet werden. Vor das Fenster (aus dem zuvor die Fensterscheiben entfernt wurden) wird eine Holzplatte an die Hauswand geschraubt, die eine auf die Zuluftvorrichtung abgestimmte Aussparung aufweist. Dann wird die Zuluftvorrichtung in die Aussparung gesteckt, und zwar so weit, bis sie mit ihrem Rand an der Holzplatte anliegt und mit der Auslassöffnung in den Arbeitsraum hineinragt. Der Rand wird dann mit der Holzplatte verschraubt. Hierzu weist der Rand vorzugsweise mindestens eine Befestigungseinrichtung, beispielsweise ein Gewinde, auf.

Vorzugsweise ist die Auslassöffnung mit einem Gitter abgedeckt. Das Gitter schützt die Klappe(n) und verhindert etwaige Manipulationen.

Vorzugsweise ist das Gitter abnehmbar. Hierdurch ist zum Beispiel eine Inspektion der Klappe(n) möglich.

Im Folgenden wird die Erfindung unter Bezugnahme auf angehängte Zeichnung näher erläutert. Die Zeichnung zeigt in:
- Figur 1: in einer Seitenansicht ein erstes Ausführungsbeispiel der erfindungsgemäßen Zuluftvorrichtung;
- Figur 2: das erste Ausführungsbeispiel in einer Draufsicht;
- Figur 3: das erste Ausführungsbeispiel in einer Ansicht von hinten;
- Figur 4: das erste Ausführungsbeispiel in einer perspektivischen Ansicht;
- Figur 5: in einer perspektivischen Ansicht ein zweites Ausführungsbeispiel;
- Figur 6: in einer Seitenansicht ein drittes Ausführungsbeispiel;
- Figur 7: das dritte Ausführungsbeispiel in einer Draufsicht;
- Figur 8: das dritte Ausführungsbeispiel in einer teilaufgebrochenen Seitenansicht;
- Figur 9: einen vergrößerten Ausschnitt der Figur 8 im Bereich des Stegs;
- Figur 10: einen vergrößerten Ausschnitt der Figur 8 im Bereich des Schlitzes; und
- Figur 11: das dritte Ausführungsbeispiel in einer perspektivischen Darstellung, in der zur besseren Anschauung die Außenwandung weggelassen ist.

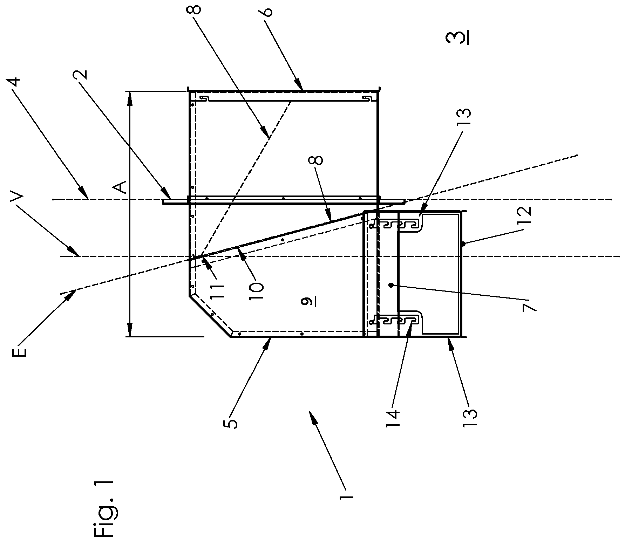

Es wird zunächst Bezug genommen auf Figur 1, die eine Seitenansicht eines ersten Ausführungsbeispiels der erfindungsgemäßen Zuluftvorrichtung 1 zeigt.

Die Zuluftvorrichtung 1 weist einen vorzugsweise umlaufenden Rand 2 auf. Mit dem Bezugszeichen 3 ist ein Arbeitsraum gekennzeichnet, der nach außen hin durch eine Schnittstelle 4 begrenzt wird, wie sie (aus Übersichtsgründen ausschließlich) in Figur 1 strichliniert dargestellt ist. Hierbei kann es sich beispielsweise um eine Platte, insbesondere eine Holzplatte, aber auch um eine Mauer oder dergleichen handeln. Im montierten Zustand ist die Zuluftvorrichtung 1 in eine (nicht dargestellte) in der Schnittstelle 4 ausgebildete Aussparung hineingeschoben, so dass sie mit dem Rand 2 an der Schnittstelle 4 anliegt. Der Rand 2 wird an der Schnittstelle 4 befestigt, beispielsweise festgeschraubt. Im montierten Zustand ragt die Zuluftvorrichtung 1 teilweise in den Arbeitsraum 3 hinein.

Die Zuluftvorrichtung 1 weist einen Zuluftkanal 5 auf. Der Zuluftkanal 5 bildet eine Auslassöffnung 6 und eine Einlassöffnung 7. Der Zuluftkanal 5 ist außerhalb des Arbeitsraumes 3 derart abgewinkelt, dass die Auslassöffnung 6 mit einem Abstand A abgedeckt ist. Dies hat zur Folge, dass senkrecht auf die Schnittstelle 4 anstehender Wind nicht unmittelbar durch die Zuluftvorrichtung 1 hindurchtreten kann. Hierdurch wird erfindungsgemäß verhindert, dass bei Windböen ein Überdruck im Arbeitsraum 3 entsteht, der die Gefahr mit sich bringt, dass im Arbeitsraum 3 befindliches kontaminiertes Material aufgrund des Überdrucks unkontrolliert aus dem Arbeitsraum 3 entweicht. Vielmehr muss der Wind - als in dem Arbeitsraum 3 benötigte Frischluft - einen Umweg nehmen. Die Frischluft tritt von unten durch die Einlassöffnung 7 hindurch in den Zuluftkanal 5 ein und nachfolgend seitlich aus der Auslassöffnung 6 in den Arbeitsraum 3 ein.

In dem Zuluftkanal 5 ist mindestens eine Klappe 8 angeordnet. Die Klappe 8 ist schwenkbar an der Innenseite der den Zuluftkanal 5 begrenzenden Außenwandung 9 befestigt. Vorzugsweise ist die Klappe 8 in ihrer Schließstellung gegenüber der Vertikalen geneigt, die vorliegend parallel zu der Schnittstelle 4 verläuft. Dies hat den Vorteil, dass aufgrund des Eigengewichts der Klappe 8 die Klappe in die Schließstellung gedrängt und in dieser gehalten wird. Strichliniert ist die Öffnungsstellung der Klappe 8 dargestellt. Die Klappe 8 schließt, sobald der Unterdruck im Arbeitsraum 3 abfällt. Dann kann kein kontaminiertes Material aus dem Arbeitsraum austreten. Wird durch eine (nicht dargestellte) Saugvorrichtung Frischluft in den Arbeitsraum 3 gesogen, öffnet die Klappe 8 in die strichliniert dargestellte Öffnungsstellung.

Die Klappe wirkt mit einem Anschlag 10 zusammen. Der Anschlag bildet eine Anschlagebene E, die zur Vertikalen V geneigt angeordnet ist. In dieser Anschlagebene liegt die Klappe 8 in ihrer Schließstellung an dem Anschlag an. Vorzugsweise ist vorgesehen, dass der Anschlag 10 an der Außenwandung 9 befestigt ist. Hier kommen beispielsweise Schrauben oder Niete 11 in Betracht.

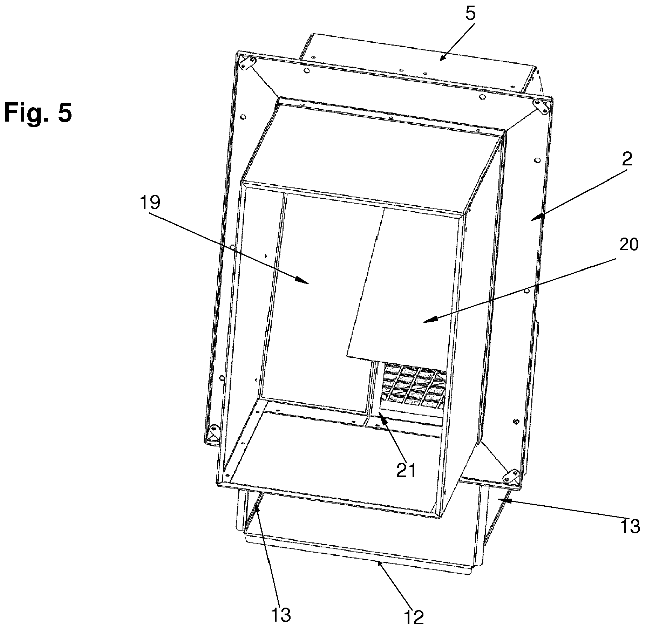

An dieser Stelle sei darauf hingewiesen, dass statt lediglich einer Klappe 8 auch mehrere Klappen zum Einsatz kommen können, die dann mit der entsprechenden Anzahl von Anschlägen zusammenwirken, wie es nachfolgend noch näher im Zusammenhang mit Figur 5 erläutert wird.

Aus Gründen der besseren Darstellbarkeit ist in Figur 1 die Schwenkbarkeit der Klappe 8 so dargestellt, dass die Klappe 8 starr ausgebildet und einseitig an der Innenseite der Außenwandung 9 über ein Gelenk schwenkbar befestigt ist. Alternativ kann vorgesehen sein, dass die Klappe starr (gleichwohl aber schwenkbar) an der Außenwandung 9 befestigt ist. Dann wird die Schwenkbarkeit durch die Flexibilität der Klappe zur Verfügung gestellt. Eine derartige flexible Klappe wird auch insoweit als vorteilhaft angesehen, als sie besonders gut in der Lage ist, sich an den Anschlag 10 anzuschmiegen und damit den Zuluftkanal 5 abzudichten. Gleichzeitig öffnet sie aufgrund ihrer Flexibilität zuverlässig bei einem Unterdruck im Arbeitsraum 3.

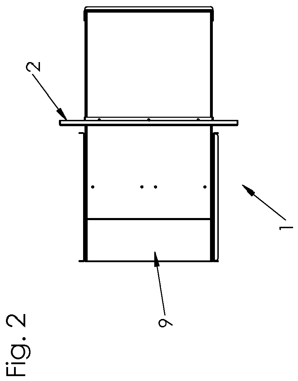

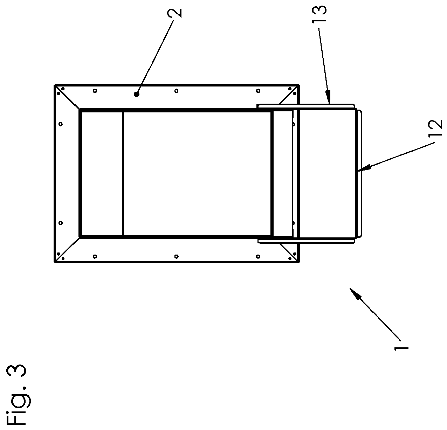

Im Folgenden wird Bezug genommen auf die Figuren 1 bis 4. Gegenüber der Öffnung 7 ist eine Abdeckung 12 angeordnet. Die Abdeckung 12 deckt die Öffnung 7 zumindest teilweise, vorzugsweise vollständig, mit Abstand ab. Sie hat die Aufgabe, die Öffnung 7 vor etwaigen Windböen von unten zu schützen. Sofern also wie zum Beispiel bei Hochhäusern im Bereich der Schnittstelle 4 (siehe Figur 1) Aufwinde zu erwarten sind, können diese nicht direkt in die Öffnung 7 eintreten. Damit wird wirkungsvoll ein plötzlich ansteigender Druck im Arbeitsraum 3 verhindert. Vorzugsweise hat die Abdeckung 12 mindestens die Größe des Strömungsquerschnitts des Zuluftkanals 5.

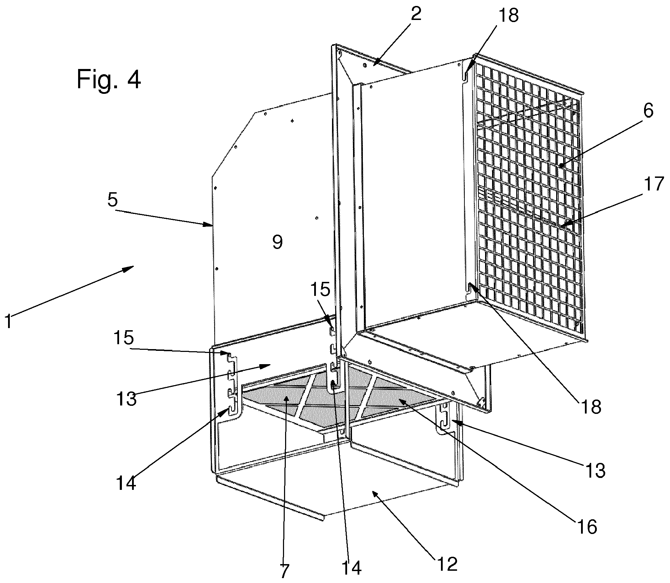

Vorzugsweise weist die Abdeckung mindestens zwei Seitenwände 13 auf. Wie insbesondere aus Figur 4 gut zu erkennen, können die Seitenwände 13 auch teilflächig ausgebildet sein. Die Seitenwände 13 dienen zur Befestigung der Abdeckung 12 an der Außenwandung 9 des Zuluftkanals 5.

Vorzugsweise ist der Abstand zwischen der Abdeckung 12 und der Einlassöffnung 7 einstellbar. Hierzu weisen die Seitenwände 13 jeweils mindestens einen Schlitz 14 auf, in den ein von der Außenwandung 9 abgehender Vorsprung 15 eingreift. Die Abdeckung 12 wird mit ihren Seitenwänden 13 in die Vorsprünge 15 der Außenwandung 9 eingehängt.

In der Einlassöffnung 7 sitzt ein Filter 16, wie es am besten in Figur 4 zu sehen ist. Der Filter 16 sorgt dafür, dass keine Verunreinigungen in den Arbeitsraum 3 eintreten. Darüber hinaus hat der Filter eine homogenisierende Wirkung, so dass etwaige Windstöße nicht in der vollen Stärke in den Zuluftkanal 5 eintreten können.

Die Auslassöffnung 6 ist mit einem Gitter 17 bedeckt, das den Zuluftkanal 5 und die darin befindliche mindestens eine Klappe schützt. Das Gitter 17 ist an der Außenwandung 9 lösbar befestigt und weist hierzu vorzugsweise eine Einhängeeinrichtung 18 auf.

Der Zuluftkanal 5 weist vorzugsweise einen rechteckigen Querschnitt auf. Hierdurch kann auf konstruktiv einfache Weise eine gute Abdichtung der mindestens einen Klappe 8 geschaffen werden.

Figur 5 zeigt in einer perspektivischen Frontansicht ein zweites Ausführungsbeispiel der erfindungsgemäßen Zuluftvorrichtung. Das zweite Ausführungsbeispiel unterscheidet sich von den ersten Ausführungsbeispiel dadurch, dass zwei Klappen 19, 20 vorgesehen sind. Die Klappe 19 befindet sich aus Darstellungsgründen in der Schließstellung und die Klappe 20 in der Öffnungsstellung. Jeder Klappe 19, 20 ist ein Anschlag zugeordnet, der als Rahmen 21 ausgebildet ist, wobei in Figur 5 lediglich der Rahmen der geöffneten Klappe 20 zu sehen ist.

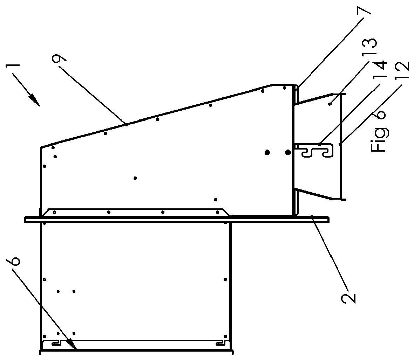

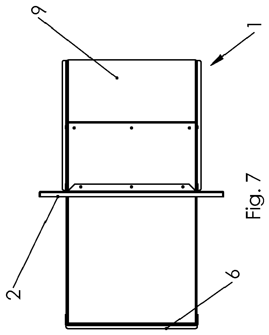

Den Figuren 6 bis 11 ist ein drittes Ausführungsbeispiel einer erfindungsgemäßen Zuluftvorrichtung 1 zu entnehmen. Im Unterschied zu den zuvor beschriebenen Ausführungsbeispielen weist hier der Zuluftkanal 5 einen sich verändernden Querschnitt auf, und zwar verkleinert sich der Querschnitt in Strömungsrichtung (in Richtung der Auslassöffnung 6). Die Außenwandung 9 ist hierzu abschnittsweise schräg geführt. Auf diese Weise wird eine Strömungsoptimierung im Zuluftkanal 5 erreicht.

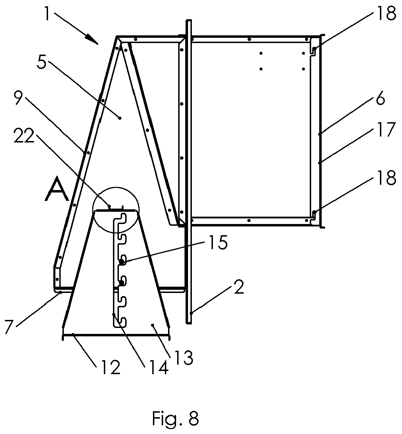

Darüber hinaus weist die Zuluftvorrichtung 1 der Figuren 6 bis 11 eine Abdeckung 12 mit Seitenwänden 13 auf, die zumindest abschnittsweise in den Zuluftkanal 5 eingreifen (siehe insbesondere Figur 8). Vorzugsweise die Seitenwände 13 innerhalb der Außenwandung 9 angeordnet. Die Seitenwände 13 der Abdeckung 12 verjüngen sich zu ihren von der Abdeckung beabstandeten Enden hin.

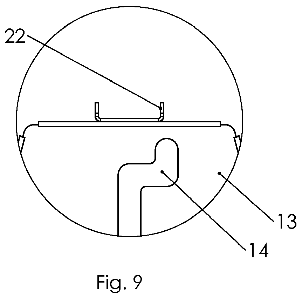

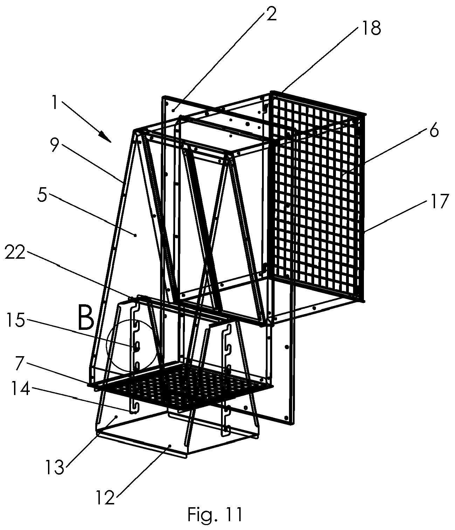

Wie insbesondere der Figur 9 zu entnehmen ist, sind die sich vorzugsweise verjüngenden Enden der Seitenwände 13 über einen Steg 22 verbunden. Der Steg 22, der vorliegend aus einem U-Profil gebildet ist, bewirkt eine Aussteifung der Seitenwände 13. Zugleich dient er als Griff, um von der Auslassöffnung 6 des Zuluftkanals 5 her eine Höhenverstellung der Abdeckung 12 vorzunehmen. Hierzu muss lediglich das vor der Auslassöffnung 6 angeordnete Gitter 17 entfernt werden (siehe Figur 11), was unproblematisch ist, da dieses über die Einhängeeinrichtung 18 lösbar befestigt ist.

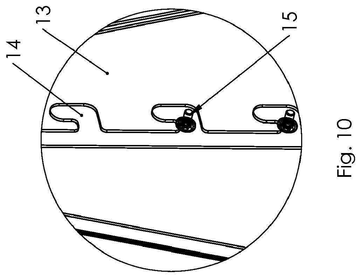

Zur Höhenverstellung der Abdeckung 12 weist jede Seitenwand 13 einen Schlitz 14 in Form einer Kulisse auf. Dieser wirkt mit mindestens einem Vorsprung 15 zusammen, der innenseitig von der Außenwandung 9 des Zuluftkanals 5 abgeht. Der Vorsprung 15 weist an seinem Ende eine Verdickung auf, welche den Schlitz 14 der Seitenwand 13 hintergreift (siehe Figur 10). Die Abdeckung ist auf diese Weise bei einer Höhenverstellung verliersicher geführt.

An dieser Stelle sei darauf hingewiesen, dass bei den verschiedenen Ausführungsbeispielen in der vorstehenden Figurenbeschreibung für strukturell ähnliche Bauteile dieselben Bezugszeichen verwendet werden, auch wenn die Bauteile voneinander abweichen. Dies dient der besseren Übersichtlichkeit.

### Bezugszeichenliste

- 1: Zuluftvorrichtung
- 2: Rand
- 3: Arbeitsraum
- 4: Schnittstelle
- 5: Zuluftkanal
- 6: Auslassöffnung
- 7: Einlassöffnung
- 8: Klappe
- 9: Außenwandung
- 10: Anschlag
- 11: Niet
- 12: Abdeckung
- 13: Seitenwand
- 14: Schlitz
- 15: Vorsprung
- 16: Filter
- 17: Gitter
- 18: Einhängeeinrichtung
- 19: Klappe
- 20: Klappe
- 21: Rahmen
- 22: Steg

- A: Abstand
- V: Vertikale
- E: Anschlagebene

## Patentansprüche

1. Zuluftvorrichtung für einen Arbeitsraum, mit
- einem Zuluftkanal (5), der eine Außenwandung (9) aufweist und eine Einlassöffnung (7) und eine Auslassöffnung (6) bildet,
- wobei der Zuluftkanal (5) derart abgewinkelt ausgebildet ist, dass sich die Außenwandung (9) mit Abstand (A) zumindest teilweise über die Auslassöffnung (6) erstreckt.

2. Zuluftvorrichtung nach Anspruch 1, **dadurch gekennzeichnet, dass** die Einlassöffnung (7) im eingebauten Zustand der Zuluftvorrichtung zur Seite hin und/oder insbesondere nach unten abgeht.

3. Zuluftvorrichtung nach Anspruch 1 oder 2, **dadurch gekennzeichnet, dass** in dem Zuluftkanal (5) mindestens eine Klappe (8; 19, 20) angeordnet ist, die in Richtung der Auslassöffnung (6) schwenkbar ist.

4. Zuluftvorrichtung nach Anspruch 3, **dadurch gekennzeichnet, dass** die mindestens eine Klappe (8; 19, 20) starr mit der Außenwandung (9) verbunden ist, wobei die Schwenkbarkeit durch die Flexibilität der Klappe zur Verfügung gestellt wird.

5. Zuluftvorrichtung nach Anspruch 3 oder 4, **gekennzeichnet durch** mindestens einen Anschlag (10), der in dem Zuluftkanal (5) angeordnet ist.

6. Zuluftvorrichtung nach Anspruch 5, **dadurch gekennzeichnet, dass** der Anschlag (10) eine Anschlagebene (E) bildet und dass die Anschlagebene im eingebauten Zustand der Zuluftvorrichtung geneigt zur Vertikalen (V) angeordnet ist, wobei vorzugsweise die Anschlagebene (E) im eingebauten Zustand der Zuluftvorrichtung mit der Vertikalen (V) einen Winkel zwischen 5° und 45° einschließt.

7. Zuluftvorrichtung nach Anspruch 5 oder 6, **dadurch gekennzeichnet, dass** in dem Zuluftkanal (5) mindestens zwei Anschläge (10) angeordnet sind, wobei jeder Anschlag einen umlaufenden Rahmen (21) bildet.

8. Zuluftvorrichtung nach einem der Ansprüche 1 bis 7, **dadurch gekennzeichnet, dass** die Zuluftvorrichtung eine vorzugsweise als Platte ausgebildete Abdeckung (12) aufweist, die sich mit Abstand vorzugsweise vollständig über die Einlassöffnung (7) erstreckt.

9. Zuluftvorrichtung nach Anspruch 8, **dadurch gekennzeichnet, dass** der Abstand zwischen der Einlassöffnung (7) und der Abdeckung (12) veränderbar ist.

10. Zuluftvorrichtung nach Anspruch 8 oder 9, **dadurch gekennzeichnet, dass** die Abdeckung (12) mindestens zwei Seitenwände (13) aufweist, die mit der Außenwandung (9) zusammenwirken, wobei vorzugsweise an mindestens zwei sich gegenüberliegenden Seiten der Abdeckung (12) jeweils mindestens eine Seitenwand (13) angeordnet ist.

11. Zuluftvorrichtung nach Anspruch 10, **dadurch gekennzeichnet, dass** die Seitenwände (13) innerhalb der Außenwandung (9) gehalten sind.

12. Zuluftvorrichtung nach Anspruch 10 oder 11, **dadurch gekennzeichnet, dass** die Seitenwände (13) zum Einführen in den Zuluftkanal (5) eine geringere Breite als die Einlassöffnung (7) aufweisen und/oder sich zum Ende hin verjüngend ausgeführt sind.

13. Zuluftvorrichtung nach einem der Ansprüche 10 bis 12, **dadurch gekennzeichnet, dass** in den Seitenwänden (13) mindestens ein Schlitz (14) ausgebildet ist, in den jeweils ein von der Außenwandung (9) abgehender Vorsprung (15) wie zum Beispiel ein Zapfen, ein Haken oder eine Schraube eingreift, wobei vorzugsweise der Schlitz (14) als Kulisse ausgeführt ist.

14. Zuluftvorrichtung nach einem der Ansprüche 10 bis 13, **dadurch gekennzeichnet, dass** die Seitenwände (13), vorzugsweise im Bereich ihrer Enden, über mindestens einen Steg (22) verbunden sind.

15. Zuluftvorrichtung nach einem der Ansprüche 1 bis 14, **dadurch gekennzeichnet, dass** die Zuluftvorrichtung einen vorzugsweise umlaufenden Rand (2) aufweist, der von der Außenwandung (9) absteht.

16. Zuluftvorrichtung nach einem der Ansprüche 1 bis 15, **dadurch gekennzeichnet, dass** die Auslassöffnung (6) mit einem Gitter (17) abgedeckt ist, wobei das Gitter vorzugsweise abnehmbar ist.
